# EUROPEAN PATENT APPLICATION

(11) **EP 4 019 382 A1**
(43) Date of publication of application: **29.06.2022**
(21) Application number: 20216566.8
(22) Date of filing: 22.12.2020
(51) Int. Cl.: B62M 3/08

(54) **CLIPLESS PEDAL RETENTION SYSTEM**

(71) Applicant: Titanum GmbH, 20095 Hamburg (DE)
(72) Inventor: de Wert, Rico M., 2803 EL Gouda (NL)
(74) Representative: Raffay & Fleck

(57) **Abstract**

A pedal body (3) of the pedal (1) has central part (4) that houses a pedal axle (11). The pedal body (3) further has a main surface for receiving force exerted by a cyclist with his foot resting thereon. In the region of the main surface the pedal (1) comprises a connecting and retaining structure that may interfere with connecting elements of shoe cleat for releasably attaching the shoe cleat to the pedal (1). These connecting elements comprise a front engagement element that is sited towards a front end of the shoe cleat and that extends transversally to a general main plane of the shoe cleat. They also comprise at least two rear engagement elements that are spaced from the front engagement element and extend transversally to the general main plane of the shoe cleat. Further, the connecting and retaining structure comprises an elongated, tongue-like resilient element that has a free end directing towards a front end of the connecting and retaining structure for releasably engaging with the front engagement element when the shoe cleat is attached to the pedal (1). The connecting and retaining structure further contains engagement structures (19) for releasably engaging with the rear engaging elements when the shoe cleat is attached to the pedal (1), and guide means (15, 16, 20, 21) for guiding the front and rear engagement elements into respective engagement positions interacting with the resilient element and with the engagement structures (19) when the shoe cleat is being moved into a position of attachment to the pedal (1).

## Description

The present invention relates to a bicycle pedal system with retention of a shoe onto a bicycle pedal by means of a shoe cleat mounted to a sole of said shoe. A specific motion not related to pedalling for propulsion of a bicycle, typically a rotation of the foot with the heel outward, can then release the mechanical link between pedal and shoe.

A bicycle clipless pedal system promotes pedal efficiency by fixing the shoe securely in place to improve a stable power transfer onto a pedal. Such pedal systems are typically used by road cyclists and mountain bikers, whether enthusiasts, professionals or anything in between.

Retention is typically achieved by a two-step motion for ingress of the pedal cleat into the pedal. First is the alignment phase, typically a forward motion of the foot to clip the shoe cleat into a hook on the pedal that is followed by a secondary typically downward motion to establish engagement. This typically consist of a push of the foot towards onto pedal platform for locking the cleat into place in the pedal with a certain force to overcome a spring tension. Retention must be deliberate and with certain biomechanical control or no effective mechanical link between rider and pedal can be achieved.

Unclipping is typically achieved by an outward rotation of the heel pivoting around the ball of the foot, by which the force of a retention spring or stop is overcome and the shoe cleat releases from the retention mechanism.

Experienced cyclist familiar with clipless pedals are typically able to clip in and out by feel and without looking.

The cleat of the retention mechanism is typically positioned on the shoe sole where the centreline of the pedal axle sits approximately below the ball of the foot, though some riders may prefer an either more forward or rearward position.

One impediment for achieving retention can be foreign objects such as debris, such as pebbles or mud. An open design with the ability to clear any mud or other substance like loam or clay present in or on the mechanism that may impede the establishing of a mechanical link of shoe and pedal may be desirable.

For mountain bike pedals, the retention mechanism is typically mirrored on two sides of a pedal, such as seen in the pedal described in JP-H04-11592 A, and lends itself to faster clip-in, even without looking. As navigating varying terrain features may sometimes require quick dismount from the bike, either precautionary or in response to preserve oneself from further potential injury from an unwanted dismount or crash, there are also situations where the judgment of the rider may lead to temporarily unclipping in order to manoeuvre over, around or through a certain obstacle or technically challenging feature that may be encountered while traveling at a given speed. In particular, the rider may feel like clipping out but not releasing yet. Then, in case the terrain is navigated safely, the rider may wish to easily clip back in. However, in case of a dismount, it can save time in taking a foot of the pedal and placing it on the ground for stability and prevention of an actual crash.

Clipless pedals typically aimed for application on a road bike, such as described in US-D324,838, commonly feature a lower stack height, by which is meant the distance between axle axis to shoe sole. These pedals typically feature a single clipless retention mechanism per pedal, as the retention mechanism is typically positioned to achieve the lowest possible stack height. The retention mechanism would then in many cases be too thick to apply on two sides and maintain a low stack height on a double-sided pedal. But there are exceptions, such as described in US 6,234,046 or US 5,606,894. Another common reason to use a single retention mechanism per pedal is to achieve a lower aerodynamic drag and minimal protrusion of the pedal system below the shoe.

One drawback of typical clipless pedal lifted off is that any pull of upward motion with the foot may exert enough force to exceed the retention force of the spring tension and can thereby lead to unintentional unclipping the shoe cleat from the pedal's retention mechanism. Unexpected severing of the mechanical connection of a shoe to the bike pedal may lead to potentially dangerous situations on the bike. This is known to upset the balance of the rider and, in competition, could also cost valuable time. Such a scenario could be especially costly. Furthermore, unintended release of the shoe from a pedal can lead to uncontrolled swerving, a fall or worse, which may be highly dangerous or even lethal when speed and/or other possibly motorized traffic are involved. In case of a crash, a shoe typically disengages from a pedal to prevent further injury or bodily harm though not always.

Pedals may offer some rotational freedom typically called float, to promote biomechanical and ergonomic advantages to riders whose knees may not move up and down in a fixed plane during the pedal stroke. Float can be described as clearly defined limits of a couple of degrees of rotation where upon exceeding this rotation the rider can sense a ramp-up in force to be required to overcome retention and engage release. Float before unclipping may offer a knee sufficient rotation, which may prevent knee pain and other injuries from developing or exacerbating.

Walkability is a characteristic that's desired from a shoe cleat, with as little impeding in the gait as possible when not clipped in.

Shoe cleats are typically regarded as consumables, whereas the pedals are designed to interact with should not wear as quickly as the shoe cleats. Under all conditions, whether clipping in or walking, it is unavoidable that shoe cleats will experience some degree of wear, though excessive wear from one condition compared to the other is undesirable, even more so of the interacting surfaces on the pedal itself.

In view of the prior art, drawbacks and needs described above, it is an object of the present invention to provide a bicycle pedal system that allows for an easy attachment and connection between the pedal and the shoe cleat, is robust and enables the cyclist to easily detach the shoe cleat from the pedal.

According to the invention this object is met and the problems existing in the prior art are at least in relevant aspects overcome by a bicycle pedal system as defined in claim 1. Further embodiments of the invention that comprise advantageous features and characteristics and that provide further benefits are set forth in depending claims 2 to 15.

According to the invention a bicycle pedal system comprises a pedal and a shoe cleat for releasably attaching to and connecting with the pedal. The pedal comprises a pedal body which features a generally tube-like central part that houses a pedal axle and which further features at least one main surface for receiving force exerted by cyclist with his foot resting on said main surface. The pedal, in the region of the main surface, comprises a connecting and retaining structure. This connecting retaining structure is designed to interfere with respective connecting elements that are arranged on the shoe cleat for releasably attaching the shoe cleat to the pedal.

As designed by the inventor the connecting elements comprise
i. a front engagement element arranged towards the front end of the shoe cleat and extending transversely to a general main plane of the shoe cleat and protruding from the downside of the shoe cleat, and
ii. at least two rear engagement elements arranged spaced from the front engagement element and towards the rear end of the shoe cleat and extending transversely to the general main plane of the shoe cleat and protruding from the downside of shoe cleat.

The number of rear engagement elements may exceed the number of two, may in particular be four. These rear engagement elements may be arranged in pairs of elements opposing each other along respective lines perpendicular to the longitudinal axis of the shoe cleat which longitudinal axis runs from a rear end to a front end of the shoe cleat. A first one of the pairs of the rear engagement elements may be arranged further towards the rear end of the shoe cleat while the second one of the pairs of the rear engagement elements may be arranged at a distance from the first one of the pairs and from the rear end of the shoe cleat and closer to the front end of the shoe cleat. The distance of the respective elements within either of the pairs of the engagement elements may be different, with, in particular, the distance between the two elements of the first one of the pairs of engagement elements which are sited farther towards the rear end of the shoe cleat being larger than the distance between the two elements of the second pair of engagement elements which are cited closer to the front end of the shoe cleat. In such an arrangement the four rear engagement elements arranged in the two pairs are sited to the corners of a regular trapezoidal form.

The shoe cleat may in particular be formed symmetrical to a longitudinal central axis thereof. This allows the shoe cleats to be attached to either of the right or left shoe of a cyclist. The shoe cleat may have bores or through-holes for leading some fixation means like screws therethrough for affixing the shoe cleats to the soles of cycling shoes.

While the particular design of the rear engagement elements of the shoe cleat as described before does not necessarily be in the way as proposed above, it is another essential and important feature of the invention that the connecting and retaining structure of the pedal comprises:
i. an elongated, tongue-like resilient element that extends from the central part with a free end directing towards the front end of the connecting and retaining structure for releasably engaging with the front engagement element when the shoe cleat is attached to the pedal,
ii. engagement structures for releasably engaging with the rear and engaging elements when the shoe cleat is attached to the pedal, and
iii. guide means for guiding the front and rear engagement elements into respective engagement positions interacting with the resilient element and with the engagement structures when the shoe cleat is being moved into a position of attachment to the pedal.

The resilient element may in particular be arranged in a position below the main surface in order not to protrude beyond and above said surface. In such a design the resilient element will be arranged or positioned inside the or covered and shadowed by the pedal body.

With the shoe cleat and pedal designed as described above the new bicycle pedal system provided herewith can be construed in a robust manner and allows for an easy clip-in connection of the shoe cleat to the pedal. In particular the present invention achieves retention with a single forward motion of the foot bearing the shoe equipped with the shoe cleat by which both alignment and engagement are effected.

When moving the foot and therewith the shoe cleat forward onto the pedal main surface, the front engagement element protruding from the downside of the shoe cleat will engage the tongue-like resilient element and will force it to move downwards against the biasing force. Upon achieving the position of attachment to the pedal ("the attachment position") the front engagement element will pass the front end or tip of the resilient element which will then spring back into its original position driven by the biasing force and which will by that lock the front engagement element of the shoe cleat in its position as it abuts said front engagement element with its front end. At the same time the rear engagement elements will get into engagement and connection with the engagement structures, thereby providing a releasably fixed connection between the shoe cleat and the pedal also in the region of the rear ends of the shoe cleat and the corresponding connecting and retaining structure on the pedal. This fixed connection, which is a releasable one as described above, hinders the shoe cleat from being lifted off the pedal as well as from sliding off the pedal either to front or back or to either lateral side (left to right).

The generally tube-like centre part of the pedal body comprises a central bore which extends into a longitudinal direction of the central part and in which bearings are placed and the pedal axle is positioned so to allow the pedal body to rotate about the longitudinal axis of the pedal axle.

In a preferred embodiment the elongated, tongue-like resilient element may be integrally formed with and protruding from the central part in a cantilevered manner. Such embodiment allows for a simple design of the pedal (pedal body). The resilient character of the resilient element in such embodiment will be achieved by choosing appropriate material thickness of the cantilevered structure based on the material properties of the material chosen, e.g. a lightweight metal. It is to be understood, however, that the tongue-like resilient element may also be provided as a separate part and may be affixed to the pedal body in any suitable region thereof, such as the central part or even any sidewalls or the like, by suitable means such as rivets, screws or the like. The flexibility and biasing character of the resilient element may, as described, originate the particular for in combination with the material properties and my thus be intrinsic with the element. This character, however, may also be achieved by arranging springs or other biasing elements in combination with a rigid part which then will be arranged on a pivot or axle or the like for enabling it to displace against a biasing force exerted by the biasing elements acting on the rigid part upon displacement of the latter.

In another preferred embodiment the pedal body of the bicycle pedal system according to the invention comprises four side elements. Of said four side elements two pairs of side elements are built with one respective pair of side elements being arranged on either side of the central part. The two pairs of side elements are thus arranged on opposing sides of the central part. The two side elements that are arranged in one pair extend transversely to the longitudinal extension of the central part towards their respective remote ends. The two side elements that form one common pair are arranged essentially parallel and spaced by a distance to each other. The two side elements of each of the pairs of side elements are interconnected at their remote ends via a bridging element. The bridging elements may be aligned essentially parallel to the longitudinal direction of the central part. With such a design the pedal body may be formed in a solid and rigid way by featuring a frame-like structure which is formed by the side elements and the bridging elements and which is further strengthened by the central part. Respective top faces of the bridging elements and/or side elements may form part of the main surface which the foot of a cyclist rests on during his ride and use of the pedal.

In particular in a possible advanced design of such an embodiment open spaces may be formed enclosed by the respective side elements, the bridging element connecting the side elements and the central part which open spaces may extend through the entire pedal, i.e. may be open to the top and bottom of the pedal body. In particular, the shoe cleat may be received in such open space at least with parts of the shoe cleat. By not being designed as kind of a blind hole but in a manner extending through the entire pedal body there is no risk of any dirt or debris to accumulate in the opening and to block it and then prevent the shoe cleat from being able to connected with the pedal. In case of any dirt or other debris being caught in the hole this will be pressed down and out of the opening when the cyclist presses the shoe cleat into the connecting and retaining structure of the pedal rather instead of blocking the hole and forming an obstacle withstanding and hindering the connection between shoe cleat and pedal.

In one particular embodiment of a pedal of the bicycle pedal system according to the particular design with the opening described above the tongue-like resilient element may be arranged in one of the open spaces. It may, in particular, be arranged there generally along a longitudinal central axis of the pedal body and may further be spaced apart with its lateral faces from the respective side elements in order to still render some open spaces left and right of the resilient element towards the neighbouring side elements. In this design there is still enough open space for pressing through and getting rid of any debris or dirt, like mud or the like, that might have been caught in the open space. Such a design this particularly useful for pedals to be used on mountain bikes or other cycles that are operated in off-road or other dirt loaded terrains.

In another preferred embodiment the connecting and retaining structure and the connecting elements of the bicycle pedal system according to the invention, when connected and attached to each other, may allow for rotation around a pivot axis that extends essentially perpendicular to the general main plane. Said pivot axis may in particular be a virtual one which is not defined by any combining structures through which it might run. Such rotation that may be allowed by the system may enable the cyclist to - up to a certain angle and degree of rotation - rotate the knee, i.e. the lower leg versus the thigh when pushing the pedal up and down. Such motion may be desirable according to the anatomic of the cyclist and will with respect of its extent vary from cyclist to cyclist.

As preferably for the bicycle pedal system according to the invention release of the shoe cleat from the pedal is achieved by a rotational movement, in particular - when in use by a cyclist - by rotating the cyclist's heel outwardly, it may be preferable to define a separation or boundary between a range of rotation which is possible in the interconnected state of pedal and shoe cleat and a range of rotation that exceeds this "allowed range" and will lead to release of the shoe cleat from the pedal. In a preferred embodiment for this purpose abutment means may be provided which delimit an angle of rotation of the shoe cleat relative to the pedal to first range within which the two parts still stay connected and attached, but allow for further rotation to a release position upon the rotational force exceeding a predetermined value. Such abutment means may be realised in the form of a notch or similar protrusion on a first one of the pieces, shoe cleat or pedal body, and an abutment surface arranged on a second one of the pieces, shoe cleat or pedal body, and abutting against said notch or protrusion. In particular the notch a similar protrusion and/or the abutment surface may comprise an oblique surface portion which when the notch or similar protrusion abuts the abutment surface leads to a lifting momentum which increases when the rotational movement is continued.

In one particular embodiment the shoe cleat may comprise two sloping elements that are arranged on opposing sides of the front engaging element and towards the front end of the shoe cleat which sloping elements protrude downwardly from the shoe cleat and comprise sloping abutment surfaces for interacting with counter surfaces formed on the pedal upon rotating movement of the shoe cleat relative to the pedal around the pivot axis for causing a lifting movement lifting the shoe cleat from the pedal. The sloping abutment surfaces may be directed rearwardly, i.e. facing towards the rear end of the shoe cleat. The sloping abutment surfaces in cooperation with the counter surfaces formed on the pedal body may form a guide for guiding the rotational movement of the shoe cleat relative to the pedal body around the pivot axis.

In a preferred embodiment, when the shoe cleat and the pedal body are rotated relative to each other up to the release position, the front engagement element is released from and no more in engagement with the resilient element and the rear engagement elements each are released from engagement with the engagement structure. In particular, the front engagement element may be rotated in a position sidewise to the resilient element and by that may be brought out of engaging contact with the resilient element.

In yet another preferred embodiment the front engagement element and/or the rear engagement elements may be formed as hook-like elements. In other words, the front engagement element and the rear engagement elements may form a recess or a protrusion extending transverse to a general longitudinal direction of extension of the said elements to form hook structures. With such hook structures the respective elements may grab and engage the respective counterparts provided on the pedal body. The front engagement element may with its hook structure connects to the front end of the resilient element. For this purpose, the hook structure of the front engagement element may be directed rearwards facing towards the rear end of the shoe cleat. The rear engagement elements also may comprise some hook structures which preferably are arranged to face towards the lateral sides of the shoe cleat. So, the rear engagement elements with their hook structures may engage some protruding rim or rail-like structures on the pedal body which form the engagement structures. If the rear engagement elements are in the number of four and are arranged pairwise as further described above, the hook structures of the farther distanced rear engagement elements that are disposed closer to the rear end of the shoe cleat may be directed inwardly and facing each other, whereas the look structures of the rear engagement elements that are disposed closer to the front end of the shoe cleat and with less distance to each other may face outwardly at two opposing sides. With such an arrangement those engagement elements with hook structures facing towards each other may engage a rail structure provided on the pedal body from the outside whereas the other rear engagement elements may engage a similar structure on the pedal body from the inside. In such a design, the rear engagement elements may also contribute to defining and allowing a rotational movement of the shoe cleat relative to the pedal body around the pivot axis.

For further defining and guiding the rotational movement protrusion may be provided protruding downwardly from the shoe cleat and placed and arranged to abut against the central part of the pedal body in the position of attachment and which will move along the surface of the central part during rotational movement in a guided manner. Said protrusion may be in the form of a frustum cone or the like.

In yet another preferred embodiment of the invention the guide means comprise an arrangement of sidewalls delimiting the space between them which space, when seen from above, is in a funnel-like form that tapers towards the front end of the connecting and retaining structure. Such funnel-like formed sidewalls will direct and lead the front engagement element towards the front end of the connecting and retaining structure of the pedal body as the shoe cleat is inserted and moved forwardly into the attachment position.

Though it may be possible to form a connecting and retaining structure on only one side of the pedal body, it may be preferred that the pedal body comprises two main surfaces on opposite sides and that the pedal comprises two identically formed connecting and retaining structures, one in the region of each of said main surfaces. Such a symmetric design will allow the cyclist when wearing cycling shoes to the soles of which shoe cleats of the system according to the invention are affixed to connect and attach such shoe cleat to the pedal on either of the main sides or surfaces irrespective of the rotational direction and alignment of the pedal.

According to a preferred embodiment the pedal may be integrally formed. Of course, this does not include the bearings and the pedal axle which elements need to be made up as different parts, but only includes the other parts, i.e. the pedal body along with all attached structures, in particular the resilient element. In similar manner, alternatively or in addition, the shoe cleat may be integrally formed. Such one-piece formation of the pedal and/or the shoe cleat allows for an easy manufacturing without having to additionally mount and/or assemble separate parts. Also, the bicycle pedal system of the invention does not require particular maintenance if the named part or parts is or are integrally formed.

The elements of the bicycle pedal system according to the invention, in particular the pedal and/or the shoe cleat, may be made of metal such as steel, or of lightweight metal such as aluminium or titanium. This also includes any alloys primarily containing the aforementioned metals. Manufacturing the pedal and/or the shoe cleat from the named materials as beneficial as these elements do not add significant weight to the bicycle/the bicycle shoes, a fact that is particularly important when looking to competition bikes and systems for sportsmen such as road bikes, mountain bikes track bikes or the like.

As particularly the pedals shall be of long-life and resisting to wear elements, these parts may be made of hard and resisting materials, in particular metals or metal alloys. They may be coated on their surfaces in order to improve wear resistance. While on the other hand the shoe cleats should not easily wear, they are considered consumables and thus may be made of different material, in particular a different metal alloy.

In a particular embodiment the pedal and/or the shoe cleat of the bicycle pedal system according to the invention may be made by means of an additive production process, in particular of metal using powder metallurgy, such as metal injection moulding (MIM) and subsequent sintering. Such additive production process allows for complex structures being produced in one piece and integrally formed. These complex structures can thus be produced in an easy and low-cost manner and as very robust products.

Further characteristics, features and advantages of the bicycle pedal system according to the invention will become apparent to a person skilled in the art by the following description of a particular embodiment in combination with the drawings showing said particular embodiment in various views. In the drawings there are shown in:
- Figure 1: a three-dimensional view of a pedal being part of a bicycle pedal system according to an embodiment of the present invention;
- Figure 2: a top view on the pedal of figure 1;
- Figure 3: a tree-dimensional view of a shoe cleat being part of a bicycle pedal system according to an embodiment of the present invention;
- Figure 4: a view on the pedal and shoe cleat in a connected state with the shoe cleat shown in a semi-transparent manner;
- Figure 5: a sectional view demonstrating the position of shoe cleat and pedal relative to each other in the connected state;
- Figure 6: a sectional view similar to the one shown in figure 5 demonstrating the situation in a position where the shoe cleat is fed into the connecting position, yet unconnected;
- Figure 7: a top view on the connected assembly of shoe cleat and pedal with the shoe cleat shown in a semi-transparent manner in order to demonstrate a rotated, yet still connected position of shoe cleat and pedal relative to each other; and
- Figure 8: a top view on the assembly of shoe cleat and pedal with the shoe cleat shown in a semi-transparent manner in order to demonstrate the rotation into a release position.

In the drawings the several figures represent different views of the relevant elements of a bicycle pedal system according to a presently preferred embodiment of the invention. This embodiment will be further described below with reference to the drawings. It shall be well understood that particular features that are described below with respect to this preferred embodiment may also be incorporated in other embodiments of the bicycle pedal system according to the invention and shall be considered in a general and broad aspect with respect to their respective benefits they may add to the bicycle pedal system according to the invention also in other embodiments.

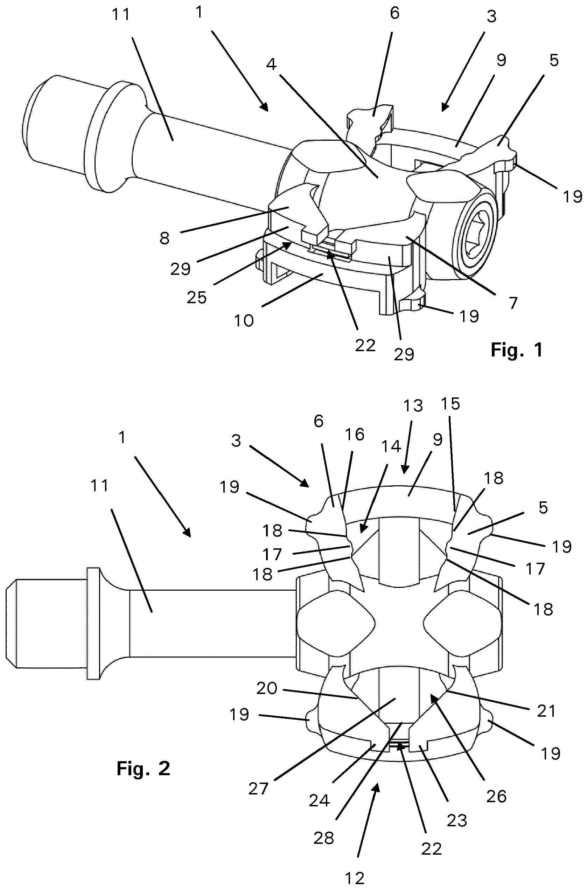

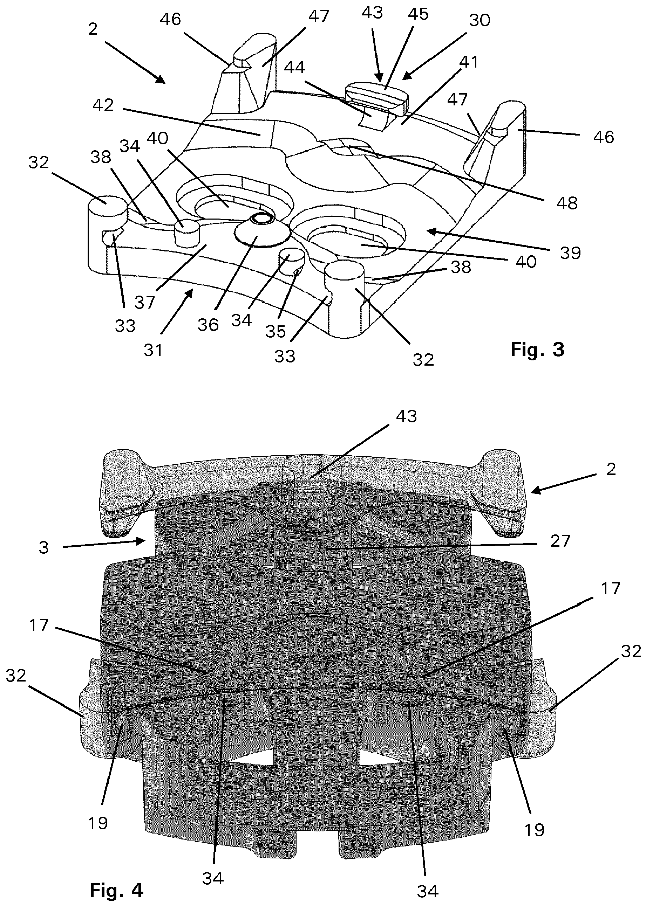

In the drawings figures 1 and 2 show, in different views, a pedal 1 as one major and important part of the bicycle pedal system. A corresponding shoe cleat 2 which forms another major and important part of the bicycle pedal system is represented in figure 3. Figures 4 to 8 show the pedal 1 and the shoe cleat 2 in combination and with respect to various different positions which will be further described below.

The pedal 1 of the described embodiment comprises a pedal body 3 that contains a central part 4 which is designed in a generally tube-like manner and extends in a longitudinal direction thereof. Four side elements 5, 6, 7, 8 of the pedal body 3 are rigidly connected to the central part 4 and extend in a generally transverse direction to the longitudinal direction of the central part 4 towards respective ends of the pedal body 3. At their remote free ends the pairs of side elements 5, 6 and 7, 8 are respectively linked and connected to one another through bridging elements 9, 10 which generally extend parallel to the longitudinal direction of the central part 4. A pedal axle 11 is housed in the central part 4 and mounted there in a rotatable manner by respective bearings, which are not shown but well known to the person skilled in the art. By this means the pedal body 3 may rotate freely around the pedal axle 11.

The upper surfaces of the central part 4 and the side elements 5, 6, 7, 8 which can be seen in figure 2 from above define a main surface onto which a cyclist's foot will rest an exert pushing forces thereon when the pedal 1 is in use and the cyclist rides the bicycle. In the general area of this main surface there are formed separate structures that make up a connecting and retaining structure and will be further described and explained below:
When seen from above, as depicted in figure 2, the pedal body 3 the connecting and retaining structure features a front end 12 and a rear and 13. It can be seen that the side elements 5, 6 extend from the rear end 13 towards the central part 4 to which they are attached with leaving an open space 14 between them. The extension of the side elements with respective inner edges 15, 16 is in a tapering manner, tapering from the rear end 13 towards the central part 4. The bridging element 3 at the rear end 3 is arranged below the height of the inner edges 15, 16 and thus defining an access opening through which the shoe cleat 2 may be fed into the open space 14 as will be described below in further detail. The inner edges 15, 16 do not follow a straight line, but feature approximately at their central portions respective notches 17 and adjacent recesses 18. Also, plate-like notches 19 can be seen that extend outwardly from the outer upper rim of side elements 5, 6 respectively and that are arranged basically on the same plane as the inner edges 15, 16. Towards the front end 12, the inner edges 20 and 21 of the side elements 7, 8 run tapering inwardly seen from the central part 4 towards the front end 12, thereby forming a funnel-like structure. This structure ends in an open slot 22 which extends through the bridging element 10. Adjacent the slot 22 two forwardly directed protrusions 23 and 24 are formed which extend above and partly cover a step-like recess 25 in the bridging element 10. In the area of the recess 25 there is formed a front wall 29 through which the slot 22 is continued and which is separated into side parts by the slot 22. This front wall 29 is curved in a certain radius.

Another open space 26 is formed in between the two side elements 7, 8 and the bridging element 10. The open spaces 14 and 26 are formed as through holes and extend through the entire pedal body 3 from the topside to the downside of it.

In the open space 26 there is arranged a tongue-like, elongated resilient element 27 which with a rear end is connected and affixed to the central part 4 and extends forwardly towards a free end 28 sited opposite and adjacent to the slot 22. The pedal body 3 of the pedal 1 is symmetrically built with identical connecting and retaining structures on its opposing main surfaces. In other words, the view seen in figure 2 identically depicts the topside and the downside of the pedal 1. By this, a cyclist may use the pedal in either position of the pedal body 3, namely as shown in figure 2 or rotated by 180° around the pedal axle 11 (resulting in the same view of the pedal as depicted in figure 2).

The pedal body 3 as well as the separate structures described above and attached thereto, is preferably built to form an integral part. It may preferably be made of metal such as steel, in particular stainless steel, or of lightweight metal such as titanium or a titanium alloy. In a preferred manufacturing processes the pedal body with all the structures and elements described above is built by an additive production process like metal injection moulding (MIM) and subsequent sintering. It shall be understood that of course the pedal axle 11 and the bearings need to be produced as separate parts and will be assembled to the one-piece part of the pedal body 3 with the integrally formed further elements to build the entire pedal 1.

The shoe cleat 2 of the bicycle pedal system according to the embodiment shown and described here is generally plate-like and has a front end 30 and a rear end 31. In figure 3 the shoe cleat 2 is seen in a view from the downside, i.e. the shoe cleat 2 is laid upside down in this view. At the rear end 31 of the shoe cleat 2 directly at the left and the right corners there are arranged two hook elements 32 which featured slit-like recesses 33 facing inwardly towards each other. Farther positioned to the front end 30, yet still in the area of the rear end 31 and also positioned further inwardly towards a centreline of the shoe cleat 2 which centreline extends longitudinally from the rear end 31 to the front end 30, there are additional hook elements 34 with slit-like recesses 35 facing outwardly and towards the recesses 33 of the hook elements 32. While in the embodiment shown the elements 32 and 34 are all designed to be hook elements with recesses (or slots) 33 and 35, it is apparently also possible to built either pair of the hook elements 32 or 34 to only be guide elements without any hooking function, i.e. without the recesses 33 or 35. The holding back of the shoe cleat 2 from being lifted off in the rear area might also be established if only one pair of the pairs of elements 32, 34 was formed as hooks. The respective structures of notches 17 or 19, respectively, will need to be accordingly modified in such case.

Placed basically on the centre line there is a notch 36 which, like the hook elements 32, 33, extends downwardly from the shoe cleat 2. In this particular embodiment, the notch 36 is frustum-cone-shaped. I could, however, be shaped in different form like partly spherical or ridge-like, depending on the form of any counter structure against which it abuts and rests as will be described further below. The hook elements 32, 33 and the notch 36 are all placed on a plateau 37. Towards the central region placed between the rear end 31 and the front end 30 there is a curved and tapering surface 38 which leads into a recessed central section 39 of the shoe cleat 2. Two openings 40 are provided in the central section 39 for receiving screws or like fixation means to fix the shoe cleat 2 to a sole of a cycling shoe. At the front end 30 there is formed another plateau 41 which is basically on the same level as the plateau 37. Another curved and tapering surface 42 links the central section 39 with the second plateau 41. At the front end 30 and placed symmetrically to the centre line, there is arranged a T-shaped hook element 43. Attached to a strip-like socket bar 44 that extends from the plateau 41 is an enlarged headpiece 45 that forms the hook and particularly also protrudes to the left and right sides from the socket bar 44. The hook structure of the hook element 43 is facing rearwards towards the rear end 31. Arranged at the front corners and aside of the hook element 43 there are formed protrusions 46 with sloping surfaces 47. Being placed at the centre line connecting the notch 36 and the hook element 43 and on the rearwardly facing rim of the plateau 41 there is arranged a notch-like protrusion 48.

The shoe cleat 2 is preferably formed integrally in one piece and may be made of lightweight metals such as titanium or a titanium alloy or aluminium or an aluminium alloy. It may yet also be made of other kind of metals, such as steel, in particular stainless steel. It may in particular be produced by an additive production process such as metal injection moulding (MIM) and subsequent sintering.

At next, and referring to figures 4 to 8 it will be described how the two main elements of the bicycle pedal system according to the embodiment, the pedal 1 and the shoe cleat 2, interact, in particular may be attached to each other, may move during use and may be released.

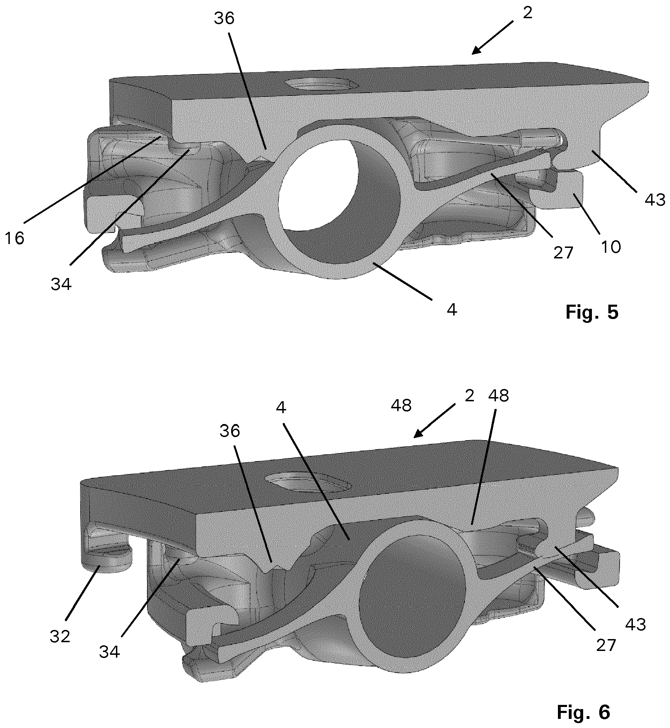

For attaching the shoe cleat 2 to the pedal 1 the cyclist will move a cycling shoe, the sole of which the shoe cleat 2 is affixed to, along a longitudinal axis of the pedal body 3 coming from the rear end 13 towards the front end 12. By this motion, a situation as depicted in figure 6 will occur where, directed by the tapering extensions of the inner edges 15, 16 and 19, 20 of the side elements 5, 6 and 7, 8, the shoe cleat 2 and its relevant structures are guided into a position where the headpiece 45 of the hook element 43 abuts against the the upwards directed surface of the resilient element 27 which element 27, as can be seen in the figure, runs upwardly towards its front end 28. At the same time the hook elements 32, 33 placed at the rear end 31 of the shoe cleat 2 will line up to pass along the outer sides and inner edges 15, 16 of the side elements 5, 6 arranged at the rear end 13 of the pedal body 3. When promoting further forward from the position shown in figure 6 towards the position shown in figure 5, the headpiece 45 of the hook element 43 will force down the resilient element 27 biasing it against a spring force. The resilient element 27 due to its nature of being a comparably thin and tongue-like element and due to its material properties is able to flex downwards and to release the way for the hook element 27 to pass on through the slot 22.

Once the hook element 27 has passed the slot 22, the resilient element 27 will, forced by the biasing force, spring back into its original position and will, with its front end 28, abut the headpiece 45 of hook element 43, thereby locking the hook element 43 in its position against any backward directed movement of the shoe cleat 2 relative to the pedal body 3. At the same time the hook elements 32 and 34 with their recesses 33 and 35 have engaged the structures formed on the side elements 5 and 6. The hook elements 32 and their recesses 33 connect to and interlink with the outer notches 19 which in the locking position rest in the recesses 33 of the hook elements 32. The inner hook elements 34 with their recesses 35 engage to the notches 17 formed on the inner edges 15, 16 of the side elements 5, 6 of the pedal body 3. So, these hook elements 32, 34 in cooperation with the notches 19, 17 prevent the shoe cleat 2 from a lift-off motion and from separating from the pedal 1. Further, the headpiece 45 of the hook element 43 is caught in the recess 25 and underneath the protrusions 23, 24 and by this also prevents the shoe cleat 2 from lifting off the pedal 1 in the region of its front end 30. From figure 5, it can further be seen, that the notch 36 abuts to and rests against the central part 4 of the pedal body 3 which central part 4, in the area, the notch 36 abuts to, in the embodiment shown may be provided with a curved outer contour, yet may be straight in other embodiments while still interacting with a notch like the notch 36 of the present embodiment. The interference of the several elements as described above in the locking position is also displayed in figure 4.

In this situation, as shown in figures 5 and 4, when the shoe cleat 2 is attached to and connected with the pedal body 3, the cyclist can push down his foot wearing the cycling shoe with the shoe cleat 2 attached thereto in order to apply a driving force to the pedal 1 for driving the bicycle without the risk of sliding off the pedal.

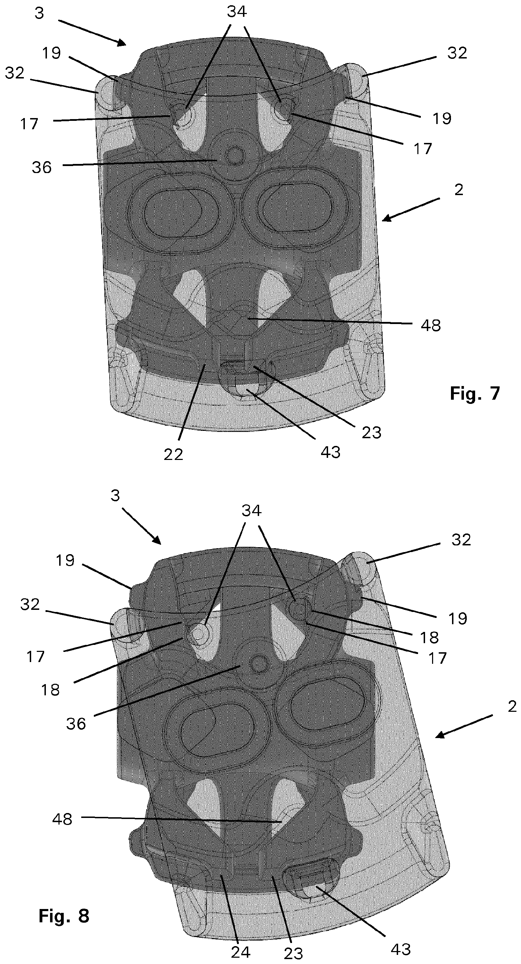

In figures 7 and 8 it is shown that a rotational movement between the pedal body 3 and the shoe cleat 2 is possible which to an extent as shown in figure 7 still renders the attached connection between the pedal body 3 of the shoe cleat 2, but which when turning farther outwards, such as shown in figure 8 will lead to release of the shoe cleat 2 from the pedal body 3. The rotational movement between shoe cleat 2 and pedal body 3 occurs around a virtual pivot axis. The movement is guided by the interaction of various parts of shoe cleat 2 and pedal body 3 respectively. First, the headpiece 45 of the hook element 43 moves and is guided along the front wall 29 and follows its curve. Further, the notch 36 that abuts the central part 4 of the pedal body 3 will also move in a guiding manner along the curved surface of the central part 4 in an area, the notch 36 abuts to it. As can be seen in figure 7 throughout certain limited angles of rotation the hook elements 32 and 34 with their recesses 33 and 35 still engage the notches 17 and 19, and the headpiece 45 of the hook element 43 is still held back and down by the protrusions 23, 24. This option to allow for a certain rotation of the shoe cleat 2 versus the pedal body 3 allows for the cyclist to, when using the bicycle pedal system according to the invention and in particular according to this embodiment, have a rotating movement between his lower leg and thigh, a movement which takes place in his knee and which will be the consequence of a certain anatomy of the cyclist according which his leg is biologically construed. This particular option of limited rotation in the connected state will help to prevent knee pain or even injuries that have been reported by cyclists.

Further rotation of the shoe cleat 2 relative to the pedal body 3 will bring the shoe cleat 2 into a release position as shown in figure 8. In this position, the hook elements 32 with their recesses 33 have fully passed the notches 19 and are disengaged from those notches 19. Further, the hook elements 34 with their recesses 35 have passed the notches 17 and moved into the recesses 18 and are free of contact with the inner edges 15, 16 of the side elements 5, 6 at the rear end 13. The hook element 43, at the same time, with its headpiece 45 fully passed the protrusion 23 or 24, respectively, and lies free to be lifted off from the recess 25 at the bridging element 10. In this position, as shown in figure 8 shoe cleat 2 and thus a cycling shoe to which this shoe cleat 2 is connected can freely be lifted off the pedal body 3. This lifting action is further supported by a corporation of several elements of the shoe cleat 2 with respective elements of the pedal body 3. The sloping surface 47 of that protrusion 46 that moves along and abuts to the front wall 29 in such turning action will cause some pressing up of the shoe cleat 2 from the pedal body 3 in this region. In the central region some interaction of the sloping surfaces 38 and 42 with the abutting surface sections of the curved surface of the central part 4 will also lead to some lifting action in this area. These lifting actions will further assist and support the separation of the shoe cleat 2 from the pedal body 3 when the cyclist decides to disengage by rotating his foot and by that the shoe cleat 2 relative to the pedal bottle 3.

In order to prevent any unintended release of the shoe cleat 2 from the pedal body 3 by rotating beyond an angle as shown in figure 7 towards a release position as shown in figure 8 there is provided a tactile response to the cyclist. This tactile response is generated by an interaction of the protrusion 48 with an upper side structure of the pedal body 3 in the region of the side elements 7, 8 and the bridging element 10. The protrusion 48 comprises sloping surfaces which abut some counter structures at the pedal body and which will lead to some increasing counterforce which needs to be overcome for rotating the shoe cleat 2 relatively to the pedal body 3 any further. Only by overcoming this counterforce the cyclist will be able to further rotate the shoe cleat 2 relative to the pedal body 3 into the release position as shown in figure 8.

It shall be well noticed that the embodiment as described above shall not be considered limiting the invention to the particulars and specific structures and design as described. For a skilled person it is clear that modifications and additions may be made without rendering the embodiment not specifying as a pedal system according to the invention.

In one possible amendment of an embodiment spring elements or similar biasing elements may be provided that help to compensate for some tolerance or clearance. It may, in this regard, be possible to add some spring element or like biasing element to the notch 36 for biasing the notch or a particular part of it towards the hook element 43. Alternatively, or even additionally, such spring or other biasing elements may be provided at or in the central part 4 and forcing an abutment piece of the central part 4 outwards towards the notch 36 or towards the hook element 43. It is likewise possible to arrange such spring or other biasing element at the hook element 43 in order to force this element, e.g. the socket bar 44 and/or the headpiece 45 rearwards towards the rear end 31 of the shoe cleat 2. Such spring element or other biasing elements as well as any abutment pieces or other elements connected therewith may be integrally formed with the remaining parts and structures or separately mounted.

From the above description of a preferred embodiment and possible variations thereof not only with respect to this particular embodiment and its possible variations, but also with respect to the new bicycle pedal system as generally provided with this invention, the significant advantages and benefits of such a bicycle pedal system according to the invention will become even more apparent to a person skilled in the art.

### List of Reference Signs

- 1: pedal
- 2: shoe cleat
- 3: pedal body
- 4: central part
- 5: side element
- 6: side element
- 7: side elemenet
- 8: side element
- 9: bridging element
- 10: bridging element
- 11: pedal axle
- 12: front end
- 13: rear end
- 14: open space
- 15: inner edge
- 16: inner edge
- 17: notch
- 18: recess
- 19: notch
- 20: inner edge
- 21: inner edge
- 22: slot
- 23: protrusion
- 24: protrusion
- 25: recess
- 26: open space
- 27: resilient element
- 28: free end
- 29: front wall
- 30: front end
- 31: reat end
- 32: hook element
- 33: recess
- 34: hook element
- 35: recess
- 36: notch
- 37: plateau
- 38: surface
- 39: central section
- 40: opening
- 41: plateau
- 42: surface
- 43: hook element
- 44: socket bar
- 45: headpiece
- 46: protrusion
- 47: surface
- 48: protrusion

## Claims

1. Bicycle pedal system comprising a pedal (1) and a shoe cleat (2) for releasably attaching to and connecting with the pedal (1), said pedal (1) comprising a pedal body (3) with a generally tube-like central part (4) that houses a pedal axle (11) and with at least one main surface for receiving force exerted by a cyclist with his foot resting on said main surface, wherein the pedal (1), in the region of said main surface, comprises a connecting and retaining structure that is designed to interfere with respective connecting elements arranged on the shoe cleat (2) for releasably attaching the shoe cleat (2) to the pedal (1), **characterized in that**
a. the connecting elements comprise
i. a front engagement element (43) arranged towards a front end (30) of the shoe cleat (2) and extending transversally to a general main plane of the shoe cleat (2) and protruding from a downside of the shoe cleat (2), and
ii. at least two rear engagement elements (32, 34) arranged spaced from the front engagement element (43) and towards a rear end (31) of the shoe cleat (2) and extending transversally to the general main plane of the shoe cleat (2) and protruding from the downside of the shoe cleat (2),
and
b. the connecting and retaining structure comprises
i. an elongated, tongue-like resilient element (27) that extends from the central part (4) with a free end (28) directing towards a front end (12) of the connecting and retaining structure for releasably engaging with the front engagement element (43) when the shoe cleat (2) is attached to the pedal (1),
ii. engagement structures (17, 19) for releasably engaging with the rear engaging elements (32, 34) when the shoe cleat (2) is attached to the pedal (1), and
iii. guide means (15, 16, 20, 21) for guiding the front and rear engagement elements (43, 32, 34) into respective engagement positions interacting with the resilient element (27) and with the engagement structures (17, 19) when the shoe cleat (2) is being moved into a position of attachment to the pedal (1).

2. Bicycle pedal system according to claim 1, **characterized in that** the elongated, tongue-like resilient element (27) is integrally formed with and protruding from the central part (4) in a cantilevered manner.

3. Bicycle pedal system according to any of the preceding claims, **characterized in that** the pedal body (3) comprises four side elements (5, 6, 7, 8) of which one respective pair of side elements (5, 6, 7, 8) are arranged on opposing sides of the central part (4) with the two side elements (5, 6; 7, 8) of one pair extending transversally to a longitudinal extension of the central part (4) towards respective remote ends of the side elements (5, 6, 7, 8), wherein the two side elements (5, 6; 7, 8) of a respective pair of side elements (5, 6, 7, 8) are arranged essentially parallel and spaced by a distance to each other, and wherein the two side elements (5, 6; 7, 8) of each pair of side elements (5, 6, 7, 8) are connected with each other at their remote ends via a respective bridging element (9, 10) extending essentially parallel to the longitudinal direction of the central part (4).

4. Bicycle pedal system according to claim 3, **characterized by** respective open spaces (14, 26) defined between the respective side elements (5, 6; 7, 8) of one pair of side elements (5, 6, 7, 8), the central part (4) and the respective bridging element (9, 10) which connects the respective side elements (5, 6; 7, 8) of one pair of side elements (5, 6, 7, 8), said open spaces extending through the entire pedal body (3).

5. Bicycle pedal system according to claim 4, **characterized in that** the tongue-like resilient element (27) is arranged in one of the open spaces (14, 26).

6. Bicycle pedal system according to any of the preceding claims, **characterized in that** the connecting and retaining structure and the connecting elements when connected and attached to each other allow for rotation around a pivot axis that extends essentially perpendicular to the general main plane.

7. Bicycle pedal system according to claim 6, **characterized in that** it comprises abutment means (48) which delimit an angle of rotation of the shoe cleat relative to the pedal to a first range, but allow for further rotation into a release position upon a rotational force exceeding a predetermined value.

8. Bicycle pedal system according to any of claims 6 or 7, **characterized in that** the shoe cleat (2) comprises two sloping elements (46) that are arranged on opposing sides of the front engaging element (43) and towards the front end (30) of the shoe cleat (2) which sloping elements (46) protrude downwardly from the shoe cleat (2) and comprise sloping abutment surfaces (47) for interacting with countersurfaces (29) formed on the pedal (1) upon rotating movement of the shoe cleat (2) relative to the pedal (1) around the pivot axis for causing a lifting movement lifting the shoe cleat (2) from the pedal.

9. Bicycle pedal system according to any of claims 7 or 8, **characterized in that** in the release position the front engagement element (43) is released from engagement with the resilient element (27) and the rear engagement elements (32, 34) each are released from engagement with the engagement structure (17, 19).

10. Bicycle pedal system according to any of the preceding claims, **characterized in that** the front engagement element (34) and/or the rear engagement elements (32, 34) are formed as hook-like elements.

11. Bicycle pedal system according to any of the preceding claims, **characterized in that** the guide means (15, 16, 20, 21) comprise an arrangement of sidewalls delimiting a space between them which space, when seen from above, is in a funnel-like form that tapers towards the front end (12) of the connecting and retaining structure.

12. Bicycle pedal system according to any of the preceding claims, **characterized in that** the pedal body (3) comprises two main surfaces on opposite sides and wherein the pedal (1) comprises two identically formed connecting and retaining structures, one in the region of each of said main surfaces.

13. Bicycle pedal system according to any of the preceding claims, **characterized in that** the pedal (1) and/or the shoe cleat (2) are integrally formed.

14. Bicycle pedal system according to any of the preceding claims, **characterized in that** the pedal (1) and/or the shoe cleat (2) are made of, in particular lightweight, metal, in particular of steel, aluminium or titanium or any alloys primarily containing said metals.

15. Bicycle pedal system according to any of the preceding claims, **characterized in that** the pedal (1) and/or the shoe cleat (2) are made by means of an additive production process.
